# EUROPÄISCHE PATENTANMELDUNG

(11) **EP 2 508 286 A1**
(43) Veröffentlichungstag der Anmeldung: **10.10.2012**
(21) Anmeldenummer: 11161369.1
(22) Anmeldetag: 06.04.2011
(51) Int. Cl.: B23D 47/04, B23Q 3/00, B25B 11/00

(54) **Plattensäge mit justierender Spannvorrichtung**

(71) Anmelder: Wilhelm Altendorf GmbH & Co. KG, 32429 Minden (DE)
(72) Erfinder: Die Erfindernennung liegt noch nicht vor
(74) Vertreter: Eisenführ, Speiser & Partner

(57) **Zusammenfassung**

Die Erfindung betrifft eine Plattensäge, umfassend, eine Auflagefläche zur Aufnahme eines Werkstücks, eine Anschlagfläche, die eine senkrecht zur Auflagefläche liegende Anschlagebene definiert, zumindest eine Spanneinrichtung, welche eine Spannfläche und einen Aktuator aufweist, der mit der Spannfläche solcherart gekoppelt ist, dass er die Spannfläche in einer Richtung verfahren kann, die eine senkrecht zur Auflagefläche liegende Richtungskomponente beinhaltet. Erfindungsgemäß ist die Spannfläche an einem Spannelement ausgebildet, welches mit einem mit dem Aktuator gekoppelten Grundkörper mittels einer Parallelogrammführung gekoppelt ist.

## Beschreibung

Die Erfindung betrifft eine Plattensäge, umfassend, eine Auflagefläche zur Aufnahme eines Werkstücks, eine Anschlagfläche, die eine senkrecht zur Auflagefläche liegende Anschlagebene definiert, zumindest eine Spanneinrichtung, welche eine Spannfläche und einen Aktuator aufweist, der mit der Spannfläche solcherart gekoppelt ist, dass er die Spannfläche in einer Richtung verfahren kann, die eine senkrecht zur Auflagefläche liegende Richtungskomponente beinhaltet. Ein weiterer Aspekt der Erfindung ist eine Spanneinrichtung und ein Verfahren zum Spannen eines Werkstücks.

Plattensägen der vorgenannten Bauart werden dazu benutzt, um großformatige Werkstückplatten in wirtschaftlich effizienter und präziserer Weise zuzuschneiden. Hierzu wird ein Werkstück typischerweise auf eine Auflagefläche aufgelegt und hinsichtlich seiner Position durch Anlegen an eine Anschlagebene, die typischerweise senkrecht zur Auflagefläche liegt, definiert. Das solcherart platzierte Werkstück wird durch eine oder mehrere Spanneinrichtungen gespannt. Hierbei kann es sich beispielsweise um pneumatische oder elektromagnetisch betätigte Spanneinrichtungen handeln, die eine Spannfläche umfassen, beispielsweise einen Spannteller, der mit definierter Kraft auf das Werkstück aufgepresst werden kann und es hierbei auf die Auflagefläche presst und hierdurch fixiert. Unter Plattensägen im Sinne der Erfindung sollen insbesondere Sägevorrichtungen verstanden werden, welche das Werkstück in ortsfester Lage auf der Auflagefläche fixieren und eine relativ zu dieser Auflagefläche bewegliche Sägeeinrichtung dann verfahren, um den Sägeschnitt auszuführen. In gleicher Weise sollen hierunter auch Formatkreissägen verstanden werden, bei denen das Werkstück auf einer beweglichen Auflagefläche fixiert wird und mitsamt dieser Auflagefläche relativ zu einer ortsfesten Sägeeinrichtung verschoben werden kann, um den Sägeschnitt auszuführen.

An Plattensägen der hier entsprechend gattungsgemäßen Bauweise werden hohe Anforderungen an die Präzision des Sägeschnittes gestellt und zugleich erwartet, das Sägeschnitte in schneller Folge reproduzierbar mit dieser Präzision geschnitten ausgeführt werden können. Zugleich unterliegen Plattensägen der eingangs genannten Bauart hohen Anforderungen hinsichtlich ihrer Belastbarkeit und Robustheit und eines Kostendrucks hinsichtlich ihrer Fertigungskosten.

Aus DE4007590C2 ist ein Werkstückspanner bekannt, der eine in einer Steuerschräge geführte Rolle aufweist, mit deren Hilfe eine horizontale und vertikale Bewegung eines Spannhebels bewirkt wird. Problematisch an dieser Ausführung ist ihre Schmutzempfindlichkeit und Verschleißanfälligkeit.

Aus DE102008004286 ist ein Spannelement bekannt, welches mittels eines horizontal liegenden Kolben, der einen Spannhebel verschwenkt. Problematisch an dieser Ausführung ist die Abhängigkeit der Spannkraftrichtung von der Höhe des zu spannenden werkstücks bzw. die Notwendigkeit, das Spannelement vertikal zu justieren, um eine vorbestimmte Spannkraftrichtung sicherzustellen.

Aus DD286795A5 ist eine Positionier- und Arretiervorrichtung bekannt, die mittels zweier Positionierklappen ein Werkstück spannen kann. Nachteilig an dieser Lösung ist, dass die Spannkraft über eine Vielzahl von Hebeln und Gelenken übertragen werden muss und hierdurch hinsichtlich der Präzision und Höhe der Spannkraft beschränkt ist.

Aus DE10225641A1 ist eine Spannvorrichtung mit einer horizontal geführten Spannbacke und zwei dieser gegenüberliegenden Spannbacken, die in einer Gleitführung schräg geführt sind, bekannt. Problematisch an dieser Konstruktion ist die beidseitige Bereitstellung einer Mechanik und die Empfindlichkeit gegenüber Verschmutzung und Verschleiß. Ein grundsätzliches Problem, welches bei solchen Plattensägen auftritt, liegt darin, dass zur Herstellung eines exakten Schnittes sichergestellt sein muss, dass das Werkstück ordnungsgemäß an einer Referenz, beispielsweise einem Winkelanschlag, anliegt. Problematisch ist hierbei, dass durch Verspannungen, Vorschubbewegungen des Sägewagens oder andere Einflüsse diese ordnungsgemäße Anlage des Werkstücks am Anschlag aufgehoben werden kann. Insbesondere dann, wenn mehrere Sägeschnitte ausgeführt werden und zwischen den Sägeschnitten eine Zustellbewegung des Plattenmaterials erfolgt, kann die ordnungsgemäße Anlage an einem Anschlag oftmals nicht in dem für eine hohe Präzision erforderlichen Maß sichergestellt werden.

Aus EP 1 321 252 B1 ist eine Plattenaufteilsäge bekannt, bei der ein Anschlagglied an einem Sägewagen angeordnet und mit diesen gemeinsam horizontal verfahrbar ist. Dieses Anschlagglied kann vertikal durch den Sägeschlitz hindurch angehoben werden und unter den Sägeschlitz abgesenkt werden. In der angehobenen Position kann durch Verfahren des Sägewagens mittels dieses Anschlaggliedes ein Plattenmaterial an den Seitenanschlag angelegt werden. Diese so vorbekannte Plattenaufteilsäge mit Anschlagglied kann zwar für eine Erhöhung der Sicherheit einer präzisen Anlage des Plattenmaterials am Seitenanschlag sorgen. Allerdings ist hierfür eine sehr aufwendige Steuerung notwendig, indem zunächst bei angehobenem Anschlagglied der Sägewagen mit geringem Vorschub an das Plattenmaterial herangeführt wird, das Plattenmaterial dann in definierter Weise verschoben und an den Seitenanschlag angelegt wird, um dann den Sägewagen um einen geringen Betrag wieder horizontal zurückzufahren, das Anschlagglied abzusenken und erst dann den Sägeschnitt durchzuführen. Insbesondere die für eine beschädigungsfreie Anlage des Plattenmaterials an den Seitenanschlag notwendige Überwachung der horizontalen Verschiebekräfte ist hierbei problematisch und kann bei empfindlichen Plattenmaterialien zu Beschädigungen führen. Zudem wird durch die aufwendigen, aufeinanderfolgenden Bewegungsabläufe von Anschlagglied und Sägewagen die Zykluszeitdauer in erheblicher Weise heraufgesetzt, was bei mehreren aufeinanderfolgenden Sägeschnitten zu einer signifikanten Verlängerung der Bearbeitungszeiten führt. Schließlich ist selbst bei empfindlicher Steuerung der horizontalen Kräfte durch die in diesem Stand der Technik gelehrte Anordnung der Andruckvorrichtung in der Trennebene eine Kantenbeschädigung der bearbeiteten Werkstücke bei empfindlichen Oberflächen nicht mit Sicherheit auszuschließen.

Der Erfindung liegt die Aufgabe zugrunde, eine Plattensäge bereitzustellen, welche in sicherer Weise als bekannte Plattensägen die Präzision des Sägeschnittes unter diesen Voraussetzungen sicherstellt.

Dieser Aufgabe wird erfindungsgemäß gelöst, indem die Spannfläche an einem Spannelement ausgebildet ist, welches mit einem mit dem Aktuator gekoppelten Grundkörper mittels einer Parallelogrammführung gekoppelt ist.

Der Erfindung liegt die Erkenntnis zugrunde, das durch den Spannvorgang des Werkstücks mittels der Spanneinrichtung das Werkstück oftmals um einen geringen Abstand aus seiner Anschlagposition an der Anschlagebene wegbewegt werden kann und hierdurch nicht mehr oder nicht mehr vollständig an der Anschlagebene anliegt. Hierdurch kann ein Fehler bei einem nachfolgend ausgeführten Sägeschnitt am so gespannten Werkstück auftreten. Der Erfindung liegt weiterhin die Erkenntnis zugrunde, das insbesondere bei schnellem Arbeiten das Werkstück beim raschen Anlegen an die Anschlagebene um einen geringen Weg von dieser zurückprallen kann und dann in dieser entsprechend beabstandeten Lage durch die Spanneinrichtung gespannt und nachfolgend gesägt würde. Auch hierdurch kann ein Fehler im resultierenden Sägemaß resultieren.

Durch die erfindungsgemäße Ausführung der Spanneinrichtung wird erreicht, dass bei dem Spannvorgang nicht nur eine zur Fixierung des Werkstücks erforderliche Spannkraft aufgebracht wird, die zwischen der Spannfläche und der Auflagefläche wirkt, sondern hierbei zusätzlich durch die Parallelogrammführung des die Spannfläche aufweisenden Spannelements eine hierzu quer, insbesondere senkrecht liegende Kraft aufgebracht wird, die das Werkstück in Richtung der Anschlagebene verschieben und gegen die Anschlagebene drücken kann. Hierzu ist es insbesondere bevorzugt, dass die Achsen der Parallelogrammführung parallel zur Auflagefläche und parallel zur Anschlagebene verlaufen. Hierdurch wird erreicht, dass bei Bewegung des Anschlagelements aus einer zum Grundkörper beabstandeten Lage in eine näher zum Grundkörper liegende Lage, insbesondere eine am Grundkörper anliegende Position, das Spannelement unter Beibehaltung der Ausrichtung der Spannfläche relativ zum Grundkörper in Richtung der Anschlagebene verschwenkt wird und hierdurch eine entsprechende Verschiebe- und Anpresswirkung auf das Werkstück ausübt.

Unter einer Parallelogrammführung im Sinne der Erfindung ist insbesondere eine durch zumindest zwei beabstandete Hebel definierte Führung zu verstehen, bei welcher an beiden Enden der Hebel jeweils parallel verlaufende Schwenkachsen ausgebildet sind. Diese Schwenkachsen sind an jeweils einem Ende der Gelenkhebel mit dem Grundkörper und am jeweils anderen Ende der Gelenkhebel mit dem Spannelement verbunden. Grundsätzlich kann ein solcher Gelenkhebel durch mehrere einzeln ausgeführte Gelenkhebel mit fluchtenden Schwenkachsen ausgeführt sein. Im Sinne der Erfindung ist insbesondere vorgesehen, dass die Gelenkhebel der Parallelogrammführung einen übereinstimmenden Abstand zwischen den beiden Schwenkachsen aufweisen, um hierdurch eine exakte Parallelogrammführung zwischen Grundkörper und Spannelement zu erzielen. Es ist jedoch zu verstehen, dass von der Erfindung umfasst auch hiervon abweichende Geometrien mit geringfügig unterschiedlichen Längen der Gelenkhebel umfasst sein sollen, welche eine trapezförmige Führung zwischen Grundkörper und Spannelement erzielen.

Gemäß einer ersten bevorzugten Ausführungsform ist vorgesehen, dass der Aktuator mit dem Grundkörper solcherart gekoppelt ist, dass der Grundkörper mittels des Aktuators in einer senkrecht zur Auflagefläche liegenden Richtung verfahren kann. Mit dieser Ausführungsform wird eine für die Spannwirkung gegen die Auflagefläche einerseits und die gewünschte Verschiebewirkung und Anpresswirkung in Richtung der Anschlagebene andererseits optimale Wirkungsrichtung der Spannkraft durch den Aktuator erzielt. Dabei ist zu verstehen, dass der Aktuator vorzugsweise in einer senkrecht zur Auflagefläche liegenden Richtung verfahren werden kann oder mit dem Grundkörper über einer Mechanik in solcher Weise gekoppelt ist, dass die Aktuatorbewegung selbst in andere Richtung verläuft und durch die Art der Kopplung die zuvor erläuterte Bewegungsrichtung des Grundkörpers bewirkt.

Noch weiter ist es bevorzugt, dass das Spannelement mit dem Grundkörper mittels zumindest zwei Hebeln gekoppelt ist, die jeweils an ihrem ersten Ende mittels einer ersten Schwenklagerung mit dem Grundkörper und an ihrem zweiten Ende mittels einer zweiten Schwenklagerung mit dem Spannelement schwenkbar verbunden sind. Dabei können die Verbindungsstellen der beiden Hebel an ihren jeweiligen Enden insbesondere als Schwenkachsen ausgebildet sein und die Schwenkachsen vorzugsweise parallel zur Auflagefläche und parallel zur Anschlagebene liegen, um die erfindungsgemäße Wirkung in besonders effizienter Weise zu erzielen. In bestimmten Anwendungen, insbesondere wenn eine Bewegung des Werkstücks auf der Auflagefläche nicht nur in Richtung einer einzigen Anschlagebene, sondern auch in Richtung einer zweiten Anschlagebene oder - fläche gewünscht ist, kann jedoch auch eine andere als eine parallele Ausrichtung der Schwenkachsen zur Anschlagebene gewählt werden, insbesondere eine schräg zur Anschlagebene liegende Ausrichtung der Schwenkachsen.

Noch weiter ist es bevorzugt, dass am Spannelement auf einer dem Grundkörper abgewandten Seite die Spannfläche ausgebildet ist, auf einer dem Grundkörper zugewandten

Seite eine Spannelementanschlagfläche ausgebildet ist und am Grundkörper auf einer dem Spannelement zugewandten Seite eine Grundkörperanschlagfläche ausgebildet ist, welche durch die Parallelogrammführung solcherart in Bezug auf die Spannelementanschlagfläche geführt ist, dass die Grundkörperanschlagfläche parallel zur Spannelementanschlagfläche an dieser anliegen kann. Mit dieser Ausführungsform wird eine konstruktiv vorteilhafte Übertragung der Spannkraft mittels Grundkörper und Anschlagelement erzielt. Insbesondere wird hierbei vermieden, dass nach erfolgter Verschwenkung des Spannelements zum Grundkörper im Zuge des Spannvorgangs die endgültig aufzubringende Spannkraft über die Parallelogrammführung übertragen werden muss. Stattdessen kommen nach erfolgtem Spannvorgang Grundkörper und Spannelemente in unmittelbare Anlage zueinander, sodass eine direkte Übertragung der Spannkraft zwischen Grundkörper und Spannelement erfolgt, welche die Parallelogrammführung entlastet.

Weiterhin ist es bevorzugt, dass die erfindungsgemäße Plattensäge fortgebildet wird durch eine Anschlageinrichtung, welche das Spannelement und den Grundkörper in einer voneinander beabstandeten Lage so zueinander positioniert, dass die Gelenkhebel der Parallelogrammführung sich schräg zur Spannfläche erstrecken, insbesondere solcherart, dass ein Schwenkpunkt einer am Spannelement angeordneten Gelenkverbindung eines Gelenkhebels in einer horizontalen Richtung näher an der Anschlagfläche liegt als eine am Grundkörper angeordnete Gelenkverbindung des gleichen Gelenkhebels. Durch diese Ausrichtung der Gelenkhebel wird mittels einer Anschlageinrichtung verhindert, dass sich ein exakt rechter Winkel zwischen den Längsachsen der Gelenkhebel der Parallelogrammführung und der Spannfläche in der ungespannten Lage ausbildet, denn ein solcher rechter Winkel würde eine unbestimmte Verschwenkung des Spannelements in eine von zwei möglichen Richtungen im Bezug auf den Grundkörper zur Folge haben. Stattdessen stehen die Gelenkhebel schräg zur Spannfläche, worunter zu verstehen ist, dass bereits eine kleine Winkelabweichung von 90° zwischen der Längsachse des Gelenkhebels und der Spannfläche ausreichend ist, um die Wirkung dieser Fortbildung zu erzielen. In diesem Fall wird bei dem Spannvorgang sich das Spannelement stets in solcher Richtung relativ zum Grundkörper verschwenken, die bereits durch die leichte Schrägstellung der Gelenkhebel aus der senkrechten Lage vorgegeben ist. So kann insbesondere dann, wenn die Schrägstellung die Gelenkverbindungen des Spannelements näher zur Anschlagfläche positioniert als die Gelenkverbindungen am Grundkörper die gewünschte Restverschiebung des Werkstücks an die Anschlagfläche und die Anpresskraft des Werkstücks an die Anschlagfläche erzielt werden. Grundsätzlich ist zu verstehen, dass, folgend der möglichen Ausgestaltung der Parallelogrammführung als leicht abgewandelte Form in Gestalt einer Trapezführung diese Wirkung auch erreicht werden kann, wenn in einem solchen Fall zumindest ein Gelenkhebel der trapezförmigen Parallelogrammführung sich schräg zur Spannfläche erstreckt, d.h. in einer von 90° verschiedenen Richtung, denn in diesem Fall wird durch diesen einen Gelenkhebel die Verschwenkrichtung des Spannelements in Bezug auf den Grundkörper in der gewünschten Weise und Richtung vorgegeben.

Noch weiter ist es bevorzugt, wenn die Achsen der Parallelogrammführung parallel zur Auflagefläche verlaufen. Hierdurch kann eine gleichmäßige Anpresskraft durch die Parallelogrammführung über den gesamten Spannvorgang, d.h. vom Zeitpunkt des ersten Kontakt des Spannelements mit dem Werkstück bis zum Zeitpunkt der erfolgten Verschwenkung des Spannelements gegenüber dem Grundkörper erreicht werden.

Noch weiter ist es bevorzugt, wenn die Achsen der Parallelogrammführung parallel zur Anschlagfläche verlaufen. Durch eine solche Ausrichtung der Achsen wird erreicht, dass die Verschiebebewegung des Werkstücks im Zuge des Spannvorgangs in einer senkrechten Richtung zur Anschlagfläche verläuft und die Anpresskraft, welche durch die mittels der Parallelogrammführung umgesetzten Spannkraft auf die Anschlagfläche ausgeübt wird, exakt senkrecht zur Anschlagfläche steht.

Es ist weiterhin bevorzugt, dass das Spannelement in einer ersten Position vom Grundkörper beabstandet ist und aus dieser ersten Position in eine zweite Position durch die Parallelogrammführung geführt werden kann, in welcher das Spannelement am Grundkörper anliegt und in einer Richtung parallel zur Auflagefläche in einem geringeren Abstand zur Anschlagebene angeordnet ist als in der ersten Position. Mit dieser Fortbildung wird eine Kinematik der Spannvorrichtung im Bezug auf die Bewegung des Spannelements und den Grundkörper zueinander definiert, welche aus einer beabstandeten Lage des Spannelements zum Grundkörper eine parallelogramm-geführte Verschwenkung des Spannelements gegenüber dem Grundkörper ermöglicht und hierbei das Spannelment näher zur Anschlagfläche bringt als den Grundkörper. Hierdurch wird die für die Spann- und Anpresswirkung erforderliche Bewegung im Bezug auf zwei explizite Positionen definiert, wobei zu verstehen ist, dass die Bewegungsbahn des Spannelements in Bezug auf den Grundkörper zwischen diesen zwei Positionen insbesondere gemäß den vorher genannten Ausführungsformen ausgebildet sein kann.

Die erfindungsgemäße Spannvorrichtung der Plattensäge kann weiter fortgebildet werden durch ein elastisches Element, welches das Spannelement aus einer Spannposition, in welcher das Spannelement am Grundkörper anliegt, in Richtung einer Position vorspannt, in welcher das Spannelement beabstandet zum Grundkörper ist. Durch diese Fortbildung wird erreicht, dass das Spannelement und der Grundkörper elastisch in eine voneinander beabstandete Position durch das elastische Element vorgespannt werden und beim Spannvorgang des Werkstücks das Spannelement gegen die Kraft dieses elastischen Elements an den Grundkörper heran geschwenkt wird. Auf diese Weise entsteht bereits während dieses parallelogramm-geführten Schwenkvorgangs eine signifikante Spannkraft auf das Werkstück, die sich durch die Vorspannkraft des elastischen Elementes definiert. Diese Spannkraft wirkt sowohl in vertikaler Richtung auf das Werkstück und kann folglich eine Anpresskraft zwischen der Spannfläche und dem Werkstück erzeugen, als auch in einer senkrecht hierzu liegenden Richtung, wodurch eine Verschiebung des Werkstücks auf der Auflagefläche durch diese elastische Vorspannkraft bewirkt werden kann. Dabei ist zu verstehen, dass zur Erzielung einer solchen Verschiebung oder einer horizontal zur Auflagefläche wirkenden Anpresskraft an die Anschlagebene ein entsprechendes Verhältnis zwischen den auf das Werkstück einwirkenden Kräften durch entsprechende Reibungsverhältnisse hergestellt werden muss. Dabei sind insbesondere die Normalkräfte zwischen der der Auflagefläche zugewandten Seite des Werkstücks und der Auflagefläche und zwischen der dem Spannelement zugewandten Seite des Werkstücks und der Spannfläche, welche im Gleichgewicht zueinander stehen, zu berücksichtigen und weiterhin die in Abhängigkeit des Reibwerts hierzu stehenden, übertragbaren senkrecht zur Spannfläche bzw. Auflagefläche stehen Kräfte. Dabei ist zu verstehen, dass es für die Erfindung vorteilhaft ist, wenn der Reibbeiwert zwischen der Auflagefläche und dem Werkstück möglichst gering, insbesondere geringer als der Reibbeiwert zwischen der Spannfläche unter dem Werkstück ist, was beispielsweise durch eine Luftlagerung des Werkstücks auf der Auflagefläche und/oder eine entsprechende Werkstoffwahl an der Spannfläche, wie beispielsweise eine Gummierung, erreicht werden kann.

Dabei ist es besonders bevorzugt, wenn das elastische Element eine Feder ist, insbesondere eine Spiralfeder, welche um eine Achse der Parallelogrammführung gewunden ist. Auf diese Art und Weise kann einerseits eine ausreichend hohe Vorspannkraft zwischen Grundkörper und Spannelement erzeugt werden, andererseits eine robuste und schmutzunempfindliche konstruktive Gestaltung realisiert werden. Hierzu kann die Spiralfeder mit einer oder mehreren Windungen ausgeführt sein, diese Windungen um die Gelenkachse einer der Schwenkachsen der Parallelogrammführung gewunden sein und sich mit zwei geraden Federschenkeln am Grundkörper bzw. Spannelement abstützen, um die Vorspannkraft aufzubringen. Grundsätzlich ist hierbei zu verstehen, dass eine oder mehrere solcher elastischer Elemente bzw. Spiralfedern vorgesehen sein können. Weiterhin ist grundsätzlich zu verstehen, dass neben einer Spiralfeder auch andere Bauweisen in bestimmten Anwendungen bevorzugt eingesetzt werden können, beispielsweise Schraubenfedern oder Tellerfedern.

Dabei ist es besonders bevorzugt, wenn das elastische Element das Spannelement aus der zweiten Position in die erste Position vorspannt. Auf diese Weise wird sichergestellt, dass die Vorspannkraft des elastischen Elements bereits im Zuge eines Spannvorgangs ab dem Zeitpunkt des Beginns der Relativbewegung zwischen Spannelement und Grundkörper eine Spannkraft auf das Werkstück ausübt und folglich eine entsprechende Verschiebung des Werkstücks auf der Auflagefläche bzw. eine Anpresskraft des Werkstücks an die Anschlagfläche bis zum Erreichen der zweiten Position bewirken kann.

Ein weiterer Aspekt der Erfindung ist die Spanneinrichtung, bei der umfassend eine Spannfläche und ein Aktuator, der mit der Spannfläche solcherart gekoppelt ist, dass er die Spannfläche in einer ersten Richtung verfahren kann, die eine senkrecht zur Spannfläche liegende Richtungskomponente beinhaltet.

Eine solche Spanneinrichtung kann insbesondere an einer oder mehreren Stellen von Formatkreissägen oder Plattensägen dazu eingesetzt werden, um ein Werkstück sicher gegen eine Auflagefläche zu spannen und hierbei zugleich eine sichere Anlage des Werkstücks an einer Anschlagebene zu erzielen. Eine solche Spanneinrichtung kann darüberhinaus aber auch in anderen Anwendungsbereichen, in denen es um eine definierte Spannung eines Werkstücks auf eine Fläche und gegen eine Anschlagebene ankommt, Verwendung finden.

Die erfindungsgemäße Spanneinrichtung kann fortgebildet werden, indem die Achsen der Parallelogrammführung parallel zur Spannfläche verlaufen. Hierdurch wird eine vorteilhafte Führung der Parallelogrammbewegung erreicht indem die Spannfläche in jeder durch die Parallelogrammführung geführten Positionen parallel zu einer vorhergehend durchlaufenden Position liegt.

Es ist grundsätzlich zu verstehen, dass die erfindungsgemäße Spanneinrichtung derjenigen Spanneinrichtung in vorteilhaften Fortbildungen entsprechen kann, die zuvor im Bezug auf die in der erfindungsgemäßen Plattensäge eingesetzte Spanneinrichtung entsprechen. In entsprechender Weise kann die erfindungsgemäße Spanneinrichtung selbst auch in solcher Weise fortgebildet werden, wie es zuvor für diese Spanneinrichtung der erfindungsgemäßen Plattensäge beschrieben worden ist, um hierdurch die hierzu beschriebenen Vorteile zu erzielen.

Die erfindungsgemäße Plattensäge und die erfindungsgemäße Spanneinrichtung kann schließlich insbesondere nach einem Verfahren zum Spannen eines Werkstücks betrieben werden, welches die Schritte aufweist:
- Auflegen des Werkstücks auf eine Auflagefläche,
- Anlegen des Werkstücks unmittelbar oder in geringem Abstand an eine senkrecht zur Auflagefläche verlaufende Anschlagfläche,
- Absenken einer mit einem Aktuator gekoppelten Spannfläche in einer vertikalen Richtung auf das Werkstück,
- Ausüben einer vertikalen Spannkraft von der Spannfläche auf das Werkstück, und
- Horizontales Bewegen der Spannfläche mittels einer Parallelogrammführung, die zwischen der Spannfläche und dem Aktuator eingesetzt ist, in Richtung der Anschlagfläche.

Mit dem solcher Art definierten Spannverfahren wird eine besonders vorteilhafte Vorgehensweise beim Spannen eines Werkstücks gegen eine Spannfläche vorgeschlagen, die neben dem eigentlichen Spannvorgang auch eine sichere Anlage des Werkstücks an einer Anschlagebene erzielt und aufrecht erhält.

Eine bevorzugte Ausgangsform der Erfindung wird anhand der beiliegenden Figuren beschrieben. Es zeigen:
- Fig. 1: eine perspektivische Ansicht von schräg seitlich vorne oben einer Ausführungsform einer erfindungsgemäßen Spannvorrichtung,
- Fig. 2: eine Rückansicht der Ausführungsform gemäß Fig. 1 in ungespannter Position,
- Fig. 3: eine Seitenansicht der Ausführungsform gemäß Fig. 1 in ungespannter Position,
- Fig. 4: eine Rückansicht gemäß Fig. 2, bei der eine von zwei Spanneinheiten in gespannter Position ist, und
- Fig. 5: eine Seitenansicht gemäß Fig. 3 in einer Position gemäß Fig. 4.

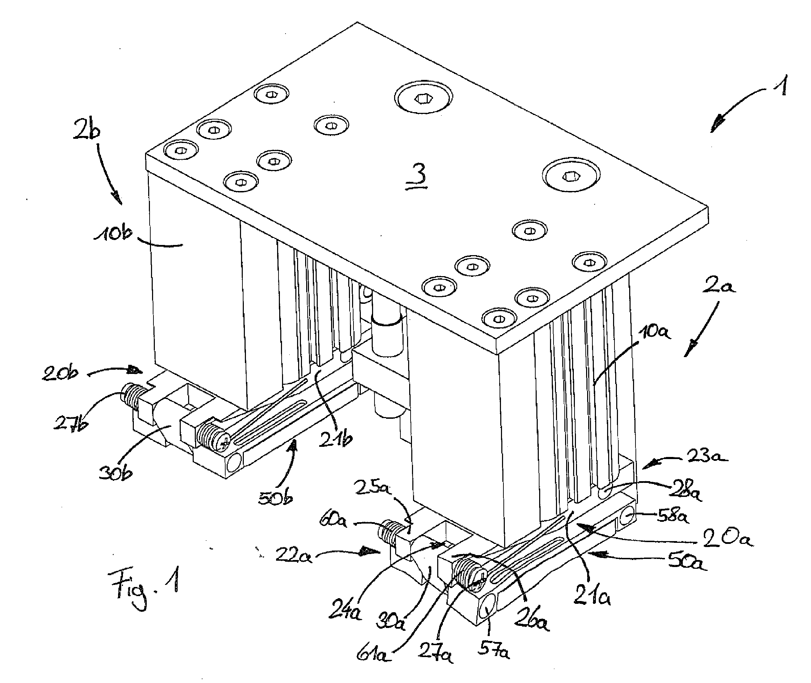

Wie aus Fig. 1 - 3 ersichtlich, umfasst die bevorzugte Ausführungsform der erfindungsgemäßen Spannvorrichtung 1 zwei prinzipiell gleich aufgebaute Spanneinheiten 2a, 2b, die nebeneinander angeordnet sind und an einer zuoberst angeordneten Deckplatte 3 durch Verschraubung befestigt sind.

Jede Spanneinheit 2a,b umfasst einen pneumatisch betätigten Spannzylinder 10a,b, der als Kurzhubzylinder ausgeführt ist und solcherart an der Deckplatte 3 verschraubt und angeordnet ist, dass er eine in Bezug auf die Deckplatte senkrecht stehende Hubbewegung ausführt. Diese senkrecht stehende Hubbewegung ist in der Einbaulage der bevorzugten Ausführungsform eine in Bezug auf die Schwerkraftrichtung parallele, das heißt vertikale Bewegung.

Der Kolben jedes Hubzylinders 10a,b ist mittels Kolbenstangen 11a,b, 12a,b mit einem Grundkörper 20a,b verbunden und bewegt daher diesen Grundkörper 20a,b in vertikaler Richtung.

Jeder Grundkörper 20a,b besteht aus einer in einer senkrecht zur Bewegungsrichtung der Hubzylinder 10a,b liegenden Ebene ausgerichteten Platte 21a,b, die an ihrem vorderen Ende 22a,b und hinteren Ende 23a,b jeweils eine mittige Ausnehmung 24a,b aufweist.

Durch die Ausnehmung 24a,b werden sich nach vorne bzw. hinten erstreckende Stege 25a,b 26a,b gebildet. In diesen Stegen 25, 26a,b ist eine horizontal bzw. parallel zur Deckplatte 3 verlaufende Bohrung angeordnet, durch die jeweils eine Achse 27a,b, 28a,b hindurchgeführt ist.

Die Achse 27, 28a,b verbindet schwenkbar einen Gelenkhebel 30a,b 40a,b mit dem Grundkörper 20a,b.

Jeder Gelenkhebel 30a,b, 40a,b weist zu diesem Zweck eine obere Bohrung an seinem oberen Ende und eine untere Bohrung an seinem unteren Ende auf. Durch die untere Bohrung jedes Gelenkhebels ist eine weitere Schwenkachse 57a,b 58a,b hindurch gesteckt, welche den Gelenkhebel schwenkbar mit einem Spannelement 50a,b verbindet.

Die Gelenkhebel 30a,b, 40a,b sind gleich lang und die Bohrungen an ihrem oberen bzw. unteren Ende sind im gleichen Abstand zueinander angeordnet. Die jeweils am vorderen Ende 22a,b angeordneten Bohrungen in den Grundkörpern 20a,b sind fluchtend zueinander, ebenso sind die Bohrungen im hinteren Ende der Grundkörper 20a,b fluchtend zueinander angeordnet. Die Spannelemente 50a,b sind auf diese Weise jeweils individuell mittels einer Parallelogrammführung mit ihren Grundkörpern 20a,b gekoppelt und können sich unabhängig voneinander bewegen.

Die Spannelemente 50a,b weisen ebenso wie die Grundkörper 20a,b an ihrem vorderen und hinteren Ende eine Ausnehmung auf, die eine gabelförmige Aufnahme der Gelenkhebel 30a,b durch die entsprechend hindurch gesteckten Schwenkachsen 57a,b 58a,b ermöglicht.

Eine untere Fläche 51a,b an jedem Spannelement 50a,b ist als Spannfläche ausgebildet und trägt hierzu mehrere Spannkissen 52a,b, welche aus einem Kunststoffmaterial bestehen und dazu dienen, den Reibbeiwert zwischen der Spannfläche 51a,b und einem Werkstück 100 zu erhöhen und zu verhindern, dass die Oberfläche des Werkstücks beim Spannvorgang und während des Spannens beschädigt wird.

Die der Spannfläche 51a,b abgewandte obere Seite 53a,b jedes Spannelements 50a,b liegt aufgrund der Parallelogrammführung exakt parallel zur unteren Fläche des Grundkörpers 20a,b. Der Grundkörper 20a,b und das Spannelement 50a,b werden durch jeweils zwei um die Schwenkachsen 27a,b außen gewundene Spiralfedern 60, 61a,b in die in den Figuren 1 bis 3 dargestellte, voneinander beabstandete Position vorgespannt. Hierzu stützen sich entsprechende Schenkel von Spiralfedern 60, 61a,b, deren Spiralfederanteil um die Schwenkachsen 27a,b gewunden sind, an dem Grundkörper 20a,b und dem Spannelement 50a,b ab und drücken diese auseinander.

Durch eine in die Gelenkhebel 30a,b 40a,b integrierte, mit jedem Spannelement 50a,b zusammenwirkende Anschlagfunktion wird erreicht, dass jeder Grundkörper 20a,b und jedes Spannelement 50a,b nicht in eine maximal voneinander beabstandete Position auseinander gedrückt werden, in der die Gelenkhebel 30a,b 40a,b folglich senkrecht zur Spannfläche 51a,b stehen würden, sondern diese nur bis zu einem Anschlag auseinander gedrückt und solcherart vorgespannt werden, dass die Gelenkhebel 30a,b 40a,b in der in den Figuren 1 bis 3 gezeigten Schrägstellung angeordnet sind.

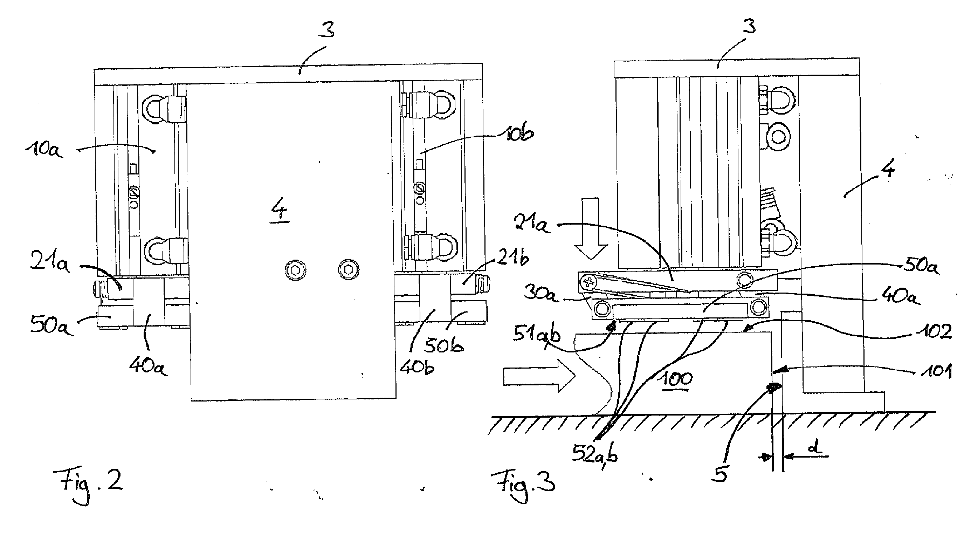

Wie insbesondere in Figur 3 gezeigt, ist die Spannvorrichtung 1 mittels der Deckplatte 3 an einem Maschinengestell 4 befestigt, an dem in einem unteren, etwa unterhalb der Spannfläche 51a,b liegenden Bereich eine sich in vertikaler Richtung erstreckende Anschlagebene 5 befestigt ist. Die Anschlagebene 5 ist an einer im Querschnitt L-förmigen Anschlagschiene ausgebildet und erstreckt sich in einer vertikalen Richtung. Die Anschlagschiene liegt parallel zu den Schwenkachsen 27a,b 28a,b und 57a,b 58a,b der Parallelogrammführung zwischen Grundkörper und Spannelement.

Ein Werkstück 100 kann zwischen die Spannfläche 51a,b und eine Auflagefläche 6, welche Teil einer Plattensäge ist, eingeschoben werden und hierbei mit einer Seitenkante 101 in direkte Nachbarschaft zur Anschlagebene 5 geschoben werden. In der in den Figuren 1 bis 3 abgebildeten, ungespannten Stellung, ist die Spannfläche 51a,b durch einen Spalt von der oberen Oberfläche 102 des Werkstücks 100 beabstandet und die seitliche Werkstückkante 101 um eine Distanz d von der Anschlagebene 5 beabstandet.

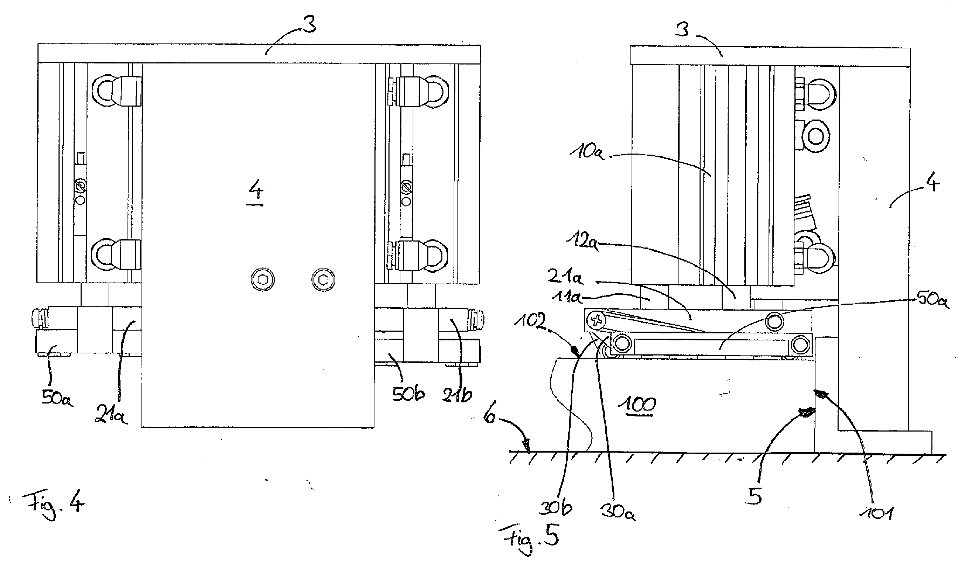

Wie aus den Figuren 4 und 5 ersichtlich ist, kann durch Ausfahren der Hubzylinder 10a,b das Werkstück 100 gespannt werden. Hierzu werden die Kolbenstangen 11a,b 12a,b jedes Hubzylinders 10a,b ausgefahren und bewegen hierdurch den Grundkörper 20a,b in Richtung auf die obere Werkstückoberfläche 102. Sobald bei dieser Bewegung die Spannfläche 51a,b mit den Spannkissen 52a,b in Kontakt mit der Werkstückoberfläche 102 tritt, wirkt eine durch die Spiralfedern 60a,b 61a,b ausgeübte Kraft auf das Werkstück 100 und presst die Spannfläche 51a,b auf die Werkstückoberfläche 102.

Im Zuge der weiteren Abwärtsbewegung des Grundkörpers 20a,b wird das Spannelement 20a,b aufgrund der Parallelogrammführung durch die Gelenkhebel 30a,b 40a,b bei vertikaler Anlage auf der Werkstückoberfläche 102 horizontal in Richtung der Anschlagebene 5 verschwenkt. Hierdurch wird eine horizontal wirkende Kraft auf das Werkstück 100 ausgeübt, welche dazu führt, dass sich das Werkstück 100 in Richtung der Anschlagebene 5 bewegt und zur Anlage an die Anschlagebene 5 gebracht wird, wie in Figur 5 dargestellt.

Nachdem das Werkstück 100 auf diese Art und Weise zur Anlage an die Anschlagebene 5 gebracht worden ist, findet eine Gleitbewegung zwischen der Spannfläche 51a,b und der Werkstückoberfläche 102 statt, bis die obere Oberfläche 53a,b des Spannelements 50a,b zur Anlage an die untere Fläche des Grundkörpers 20a,b kommt. Sobald diese Anlage erzielt worden ist, kann die gewünschte Spannkraft unmittelbar über den Pneumatikzylinder 10a,b, den Grundkörper 20a,b und das Spannelement 50a,b auf das Werkstück 100 aufgebracht und das Werkstück 100 sicher zwischen der Spannfläche 51a,b und der Auflagefläche 6 gespannt werden. Hierbei wird das Werkstück 100 sicher an der Anschlagebene 5 in Anlage gehalten.

Wie aus den Figuren 4 und 5 ersichtlich, wird durch die individuelle Beweglichkeit der Spannelemente 70a und 70b in Bezug auf deren jeweils zugeordnete Grundkörper 20a und 20b erreicht, dass auch dann, wenn ein Werkstück nur unter einer der beiden Spanneinheiten 1a,b zu liegen kommt, eine verkantungsfreie und zugleich sichere Spannung und Anlage an der Anschlagebene 5 durch eine der beiden Spanneinheiten 1a,b erzielt wird.

Mit der erfindungsgemäßen Spanneinrichtung wird somit eine insbesondere für Plattensägen nützliche, die Präzision des Sägeschnitts erhöhende Einspannung eines Werkstücks in exakter Anlage an eine Anschlagebene erzielt, ohne dass hierfür zusätzliche Spann- oder Klemmvorrichtungen nötig wären.

## Patentansprüche

1. Plattensäge, umfassend,
- eine Auflagefläche zur Aufnahme eines Werkstücks,
- eine Anschlagfläche, die eine senkrecht zur Auflagefläche liegende Anschlagebene definiert,
- zumindest eine Spanneinrichtung, welche eine Spannfläche und einen Aktuator aufweist, der mit der Spannfläche solcherart gekoppelt ist, dass er die Spannfläche in einer Richtung verfahren kann, die eine senkrecht zur Auflagefläche liegende Richtungskomponente beinhaltet,
**dadurch gekennzeichnet, dass** die Spannfläche an einem Spannelement ausgebildet ist, welches mit einem mit dem Aktuator gekoppelten Grundkörper mittels einer Parallelogrammführung gekoppelt ist.

2. Plattensäge nach Anspruch 1,
**dadurch gekennzeichnet, dass** der Aktuator mit dem Grundkörper solcherart gekoppelt ist, dass der Grundkörper mittels des Aktuators in einer senkrecht zur Auflagefläche liegenden Richtung verfahren kann.

3. Plattensäge nach Anspruch 1 oder 2,
**dadurch gekennzeichnet, dass** das Spannelement mit dem Grundkörper mittels zumindest zwei Hebeln gekoppelt ist, die jeweils an ihrem ersten Ende mittels einer ersten Schwenklagerung mit dem Grundkörper und an ihrem zweiten Ende mittels einer zweiten Schwenklagerung mit dem Spannelement schwenkbar verbunden sind.

4. Plattensäge nach einem der vorhergehenden Ansprüche,
**dadurch gekennzeichnet, dass** am Spannelement auf einer dem Grundkörper abgewandten Seite die Spannfläche ausgebildet ist, auf einer dem Grundkörper zugewandten Seite eine Spannelementanschlagfläche ausgebildet ist und am Grundkörper auf einer dem Spannelement zugewandten Seite eine Grundkörperanschlagfläche ausgebildet ist, welche durch die Parallelogrammführung solcherart in Bezug auf die Spannelementanschlagfläche geführt ist, dass die Grundkörperanschlagfläche parallel zur Spannelementanschlagfläche an dieser anliegen kann.

5. Plattensäge nach einem der vorhergehenden Ansprüche,
**gekennzeichnet durch** eine Anschlageinrichtung, welche das Spannelement und den Grundkörper in einer voneinander beabstandeten Lage so zueinander positioniert, dass die Gelenkhebel der Parallelogrammführung sich schräg zur Spannfläche erstrecken, insbesondere solcherart, dass ein Schwenkpunkt einer am Spannelement angeordneten Gelenkverbindung eines Gelenkhebels in einer horizontalen Richtung näher an der Anschlagfläche liegt als eine am Grundkörper angeordnete Gelenkverbindung des gleichen Gelenkhebels.

6. Plattensäge nach einem der vorhergehenden Ansprüche,
**dadurch gekennzeichnet, dass** die Achsen der Parallelogrammführung parallel zur Auflagefläche verlaufen.

7. Plattensäge nach einem der vorhergehenden Ansprüche,
**dadurch gekennzeichnet, dass** die Achsen der Parallelogrammführung parallel zur Anschlagfläche verlaufen.

8. Plattensäge nach einem der vorhergehenden Ansprüche,
**dadurch gekennzeichnet, dass** das Spannelement in einer ersten Position vom Grundkörper beabstandet ist und aus dieser ersten Position in eine zweite Position durch die Parallelogrammführung geführt werden kann, in welcher das Spannelement am Grundkörper anliegt und in einer Richtung parallel zur Auflagefläche in einem geringeren Abstand zur Anschlagfläche angeordnet ist als in der ersten Position.

9. Plattensäge nach einem der vorhergehenden Ansprüche,
**gekennzeichnet durch** ein elastisches Element, welches das Spannelement aus einer Spannposition, in welcher das Spannelement am Grundkörper anliegt, in Richtung einer Position vorspannt, in welcher das Spannelement beabstandet zum Grundkörper ist.

10. Plattensäge nach Anspruch 9,
**dadurch gekennzeichnet, dass** das elastische Element eine Feder ist, insbesondere eine Spiralfeder, welche um eine Achse der Parallelogrammführung gewunden ist.

11. Plattensäge nach Anspruch 8 und Anspruch 9 oder 10,
**dadurch gekennzeichnet, dass** das elastische Element das Spannelement aus der zweiten Position in die erste Position vorspannt.

12. Spanneinrichtung, umfassend eine Spannfläche und einen Aktuator, der mit der Spannfläche solcherart gekoppelt ist, dass er die Spannfläche in einer ersten Richtung verfahren kann, die eine senkrecht zur Spannfläche liegende Richtungskomponente beinhaltet,
**dadurch gekennzeichnet, dass** die Spannfläche an einem Spannelement ausgebildet ist, welches mit einem mit dem Aktuator verbundenen Grundkörper mittels einer Parallelogrammführung gekoppelt ist.

13. Spanneinrichtung nach Anspruch 12,
**dadurch gekennzeichnet, dass** die Achsen der Parallelogrammführung parallel zur Spannfläche verlaufen..

14. Spanneinrichtung nach Anspruch 12 oder 13,
**dadurch gekennzeichnet, dass** die Spanneinrichtung nach einem der Ansprüche 2-11 fortgebildet ist.

15. Verfahren zum Spannen eines Werkstücks, mit den Schritten:
- Auflegen des Werkstücks auf eine Auflagefläche,
- Anlegen des Werkstücks unmittelbar oder in geringem Abstand an eine senkrecht zur Auflagefläche verlaufende Anschlagfläche,
- Absenken einer mit einem Aktuator gekoppelten Spannfläche in einer vertikalen Richtung auf das Werkstück,
- Ausüben einer vertikalen Spannkraft von der Spannfläche auf das Werkstück, und
- Horizontales Bewegen der Spannfläche mittels einer Parallelogrammführung, die zwischen der Spannfläche und dem Aktuator eingesetzt ist, in Richtung der Anschlagfläche.
